# FASCICULE DE BREVET EUROPEEN

(11) **EP 2 407 954 B1**
(45) Date de publication et mention de la délivrance du brevet: **27.06.2018**
(21) Numéro de dépôt: 11173458.8
(22) Date de dépôt: 11.07.2011
(51) Int. Cl.: G09B 9/12, G09B 9/14, B25J 9/00, B25J 17/02, B25J 11/00

(54) **Dispositif actionneur hexapode**
Sechsfüßige Betätigungsvorrichtung
Hexapod actuator device

(30) Priorité: 13.07.2010 FR 1002953
(43) Date de publication de la demande: 18.01.2012
(73) Titulaire: THALES, 92400 Courbevoie (FR)
(72) Inventeur: Alet, Robert, 95800 Courdimanche (FR); Le Guillou, René, 78130 Maurespas (FR)
(74) Mandataire: Lucas, Laurent Jacques

(56) Documents cités:
- DE-C1- 19 542 869
- PHAM NGOC ET AL: "Development of a new 6-DOF parallel-kinematic motion simulator (ICCAS 2008)", CONTROL, AUTOMATION AND SYSTEMS, 2008. ICCAS 2008. INTERNATIONAL CONFERENCE ON, IEEE, PISCATAWAY, NJ, USA, 14 octobre 2008 (2008-10-14), pages 2370-2373, XP031367589, DOI: DOI:10.1109/ICCAS.2008.4694202 ISBN: 978-89-950038-9-3
- RAO A B K ET AL: "Workspace and dexterity analyses of hexaslide machine tools", 2003 IEEE INTERNATIONAL CONFERENCE ON ROBOTICS AND AUTOMATION, PISCATAWAY, NJ, USA; [PROCEEDINGS OF THE IEEE INTERNATIONAL CONFERENCE ON ROBOTICS AND AUTOMATION],, vol. 3, 14 septembre 2003 (2003-09-14), pages 4104-4109, XP010668285, DOI: DOI:10.1109/ROBOT.2003.1242228 ISBN: 978-0-7803-7736-3
- Borràs et al.: "A Reconfigurable 5-DoF 5-SPU Parallel Platform", , 5 novembre 2009 (2009-11-05), pages 617-623, XP002633121, Extrait de l'Internet: URL:http://upcommons.upc.edu/e-prints/bits tream/2117/6436/1/1.pdf [extrait le 2011-04-15]

## Description

La présente invention concerne un actionneur hexapode notamment utilisé dans des simulateurs de vol ou de conduite. L'invention se situe dans le domaine des systèmes permettant une mise en mouvement de cabines de pilotage par exemple.

Différents systèmes de mouvement peuvent être utilisés dans des simulateurs de vol ou de conduite. Notamment des systèmes de mobilisations sont utilisés dans des simulateurs de vol d'hélicoptères ou d'avion. Ceux ci répondent à des critères de qualifications définis par des organismes de certification notamment la FAA, acronyme pour l'expression anglo-saxonne Federal Aviation Administration et l'équivalent en Europe avec la JAA, acronyme pour l'expression anglo-saxonne Joint Aviation Authorities.
L'invention peut notamment s'appliquer à des simulateurs répondant à des critères de qualification FFS level B, acronyme pour l'expression anglo-saxonne Full Flight Simulator level B, signifiant simulateur de vol de niveau B. Ce type de simulateur est de plus en plus prisé par des clients du fait notamment de leur faible encombrement par rapport à des simulateurs de type FFS level D. L'invention peut également s'appliquer à des simulateurs répondant à des critères de qualification FFS level D.

L'état de la technique le plus connu en matière de plateforme mobile pour simulateur est une plate forme de Stewart. Le concept de la plateforme de Stewart est basé sur l'utilisation d'un positionneur hexapode permettant un mouvement à six degrés de liberté. Les plateformes mobiles de Stewart sont notamment utilisées pour les simulateurs de vol, d'après une conception de K. Cappel. Le type de mouvement de ces plateformes fait partie de la famille des robots parallèles.
Il existe plusieurs motorisations possibles pour animer un hexapode selon l'état de la technique :
- des vérins hydrauliques, utilisés principalement pour mobiliser des charges supérieures à quatorze tonnes environ ;
- des vérins électriques à vis, pour des charges inférieures à quatorze tonnes environ ;
- des systèmes pneumatiques pour de faibles charges, par exemple inférieures à cinq cent kilos.
Les motorisations existantes, permettant d'animer un hexapode selon l'art antérieur, sont des produits ayant une configuration figée pour une application donnée. Par exemple pour changer la course d'un vérin, il faut mettre une butée à l'intérieur du vérin ou allonger la longueur de la vis. De ce fait la modification de la longueur du vérin entraîne un nouveau design du vérin, une revalidation et une ré-étude de la cinématique et de la géométrie de l'hexapode.
Le document de PHAM NGOC ET AL "Development of a new 6-DOF parallel-kinematic motion simulator (ICCAS 2008)",CONTROL, AUTOMATION AND SYSTEMS, 2008. ICCAS 2008. INTERNATIONAL CONFERENCE ON, IEEE, PISCATAWAY, NJ, USA, 14 octobre 2008 (2008-10-14), pages 2370-2373, XP031367589, DOI: DOI:10.1109/ICCAS.2008.4694202, ISBN: 978-89-950038-9-3, présente un dispositif de simulation à six degrés de liberté. La plateforme mobile est connectée sur une base fixe par six PUS (Prismatic-Universal-Spherical) parallèles. Le document de RAO A B K ET AL: "Workspace and dexterity analyses of hexaslide machine tools", 2003 IEEE INTERNATIONAL CONFERENCE ON ROBOTICS AND AUTOMATION, PISCATAWAY, NJ, USA; [PROCEEDINGS OF THE IEEE INTERNATIONAL CONFERENCE ON ROBOTICS AND AUTOMATION], vol. 3, 14 septembre 2003 (2003-09-14), pages 4104-4109, XP010668285, DOI: DOI:10.1109/ROBOT.2003.1242228ISBN: 978-0-7803-7736-3, divulgue plusieurs modèles mathématiques de hexapodes et recommande une solution avec des axes linéaires parallèles en couple.

Les produits existants ne permettent donc pas de réaliser des adaptations de géométrie simples, en fonction des demandes des clients, en matière de simulateurs notamment. De plus ces produits sont réalisés en petites quantités et sont donc très chers.
Dans le cas des hexapodes à vérins électriques, le niveau de vibration et le bruit sont plus importants qu'avec des hexapodes hydrauliques, ce qui peut perturber l'entrainement des pilotes. Ce phénomène est dû principalement aux mouvements recyclés des billes sur la vis ou aux rouleaux entraînés à grande vitesse sur la vis.
D'autre part, dans le cas d'un hexapode selon l'art antérieur, l'intégration d'éléments de sécurité est très contraignante, notamment :
▪ Le retour en position stable horizontale, en cas de coupure d'énergie ou de panne électrique de commande, afin de faciliter la sortie de l'équipage, nécessite une source d'alimentation secourue annexe. Ce type d'alimentation secourue est onéreux tant pour son achat que pour son entretien.
▪ En cas de défaillance des systèmes de contrôle commande, des amortisseurs de choc doivent être intégrés pour éviter les décélération brutales en fin de course, à cause de la présence de la vis, ils sont étudiés et certifiés spécialement pour ce type d'application et de ce fait sont beaucoup plus chers que les amortisseur choisis dans les catalogues des fournisseurs de l'Industrie

Un but de l'invention est notamment de pallier les inconvénients précités. A cet effet, l'invention a pour objet un dispositif actionneur hexapode comportant six jambes, chacune des six jambes ayant une extrémité supérieure et une extrémité inférieure. L'extrémité supérieure de chacune des six jambes est montée sur une rotule ayant trois degrés de liberté en rotation, chaque rotule étant solidaire d'une plateforme mobile. L'extrémité inférieure de chacune des six jambes est mobile le long d'un axe linéaire correspondant. Le dispositif comporte aussi six axes linéaires fixes par rapport au support plan. Le dispositif est caractérisé en ce que chacun des axes linéaires est soit coplanaire soit incliné par rapport au support plan, en ce que chaque inter-distance entre les extrémités inférieures de deux jambes voisines varie de manière indépendante, et chacun des six axes linéaires a une longueur fixée qui peut être différente, avec une première extrémité appartenant à une première ellipse et une deuxième extrémité appartenant à une deuxième ellipse, la première ellipse et la deuxième ellipse étant ou non confondues, et les projections de chacun des axes linéaires sur le support plan définissent des lignes droites distinctes, deux lignes consécutives étant non parallèles.

Dans un mode de réalisation, les axes linéaires peuvent être solidaires d'un support au sol.

Dans un autre mode de réalisation, les axes linéaires peuvent être solidaires d'un support au plafond.

Dans un mode de réalisation avantageux, les axes linéaires peuvent être réalisés par des rails, chaque première extrémité de chaque jambe reposant sur un chariot guidé sur un des rails, le chariot étant entraîné par un moteur engrainant sur une crémaillère.

Dans un mode de réalisation avantageux, le chariot peut être entraîné par un moteur engrainant sur une crémaillère.

Dans un autre mode de réalisation le chariot peut être entraîné par un moteur engrainant sur une courroie crantée.

Dans un autre mode de réalisation le chariot peut être entraîné par adhérence.

Dans un autre mode de réalisation le chariot est entraîné par une vis à billes ou à rouleaux.

L'invention a notamment pour principaux avantages de réduire le coût de production des dispositifs de mobilisation de simulateur, tout en garantissant un système de mobilisation fiable et performant.

D'autres caractéristiques et avantages de l'invention apparaîtront à l'aide de la description qui suit, donnée à titre illustratif et non limitatif, et faite en regard des dessins annexés qui représentent :
- la figure 1 : un positionneur hexapode selon l'état de la technique ;
- la figure 2 : un schéma d'un premier mode de réalisation possible pour le dispositif selon l'invention ;

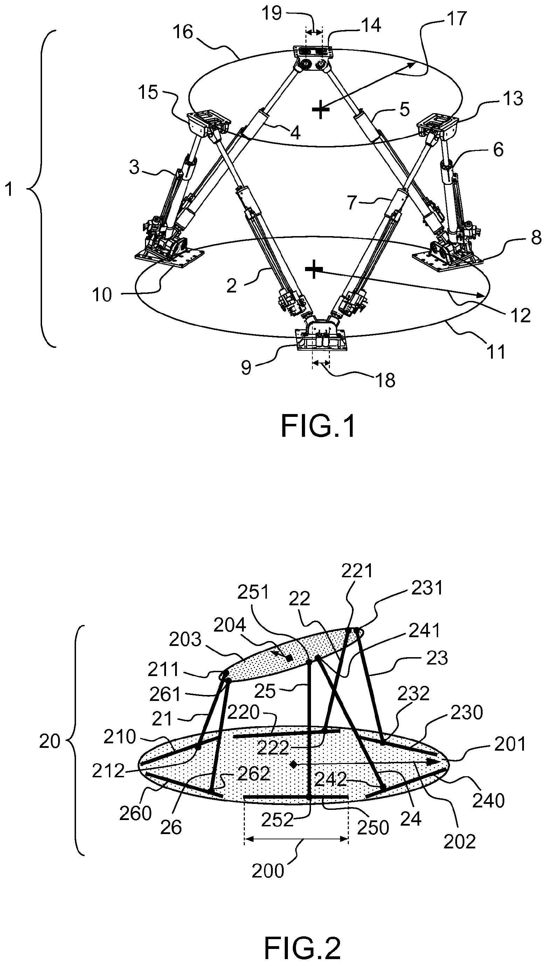

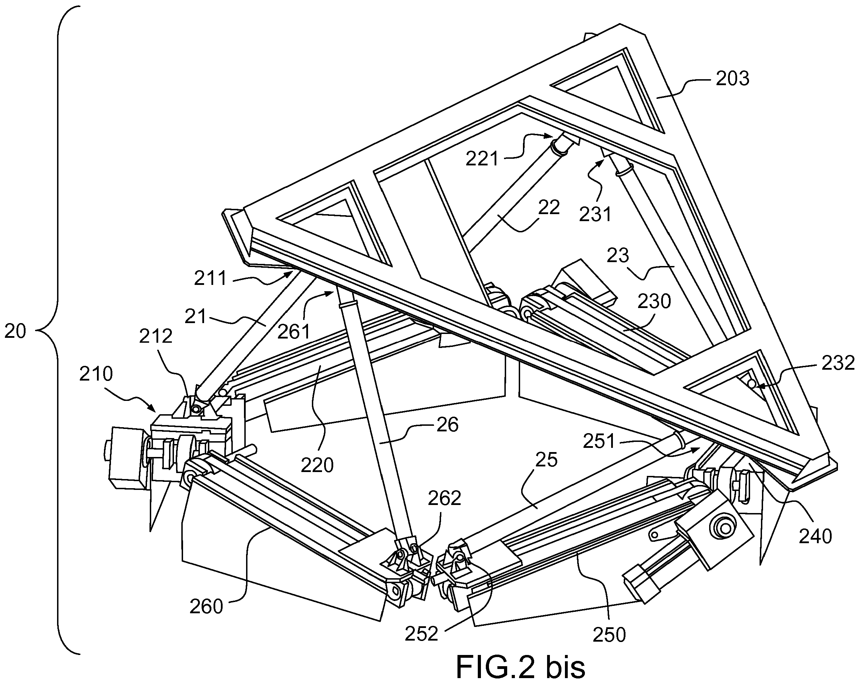

- la figure 2bis : un schéma d'une variante du premier mode de réalisation possible pour le dispositif selon l'invention ;

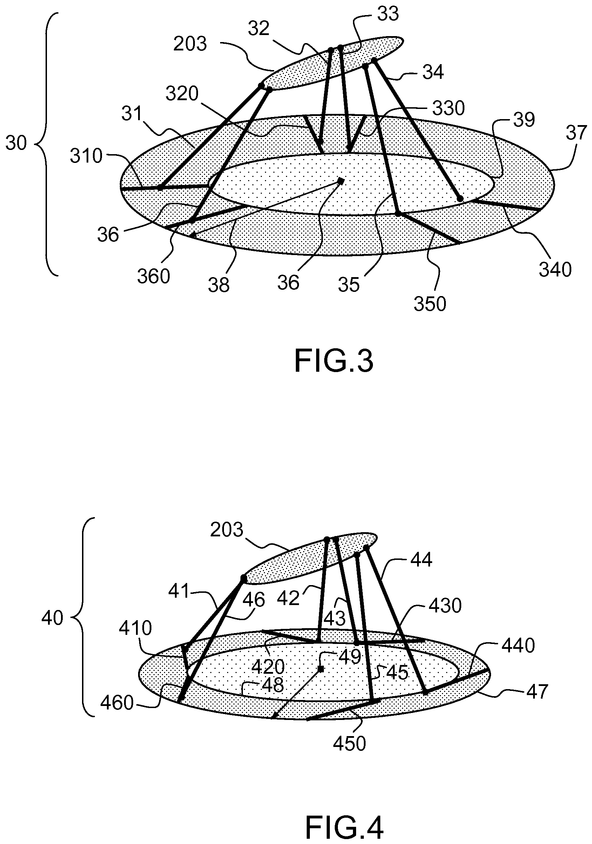

- la figure 3 : un schéma d'un deuxième mode de réalisation possible pour le dispositif selon l'invention ;
- la figure 4 : un schéma d'un troisième mode de réalisation possible pour le dispositif selon l'invention ;

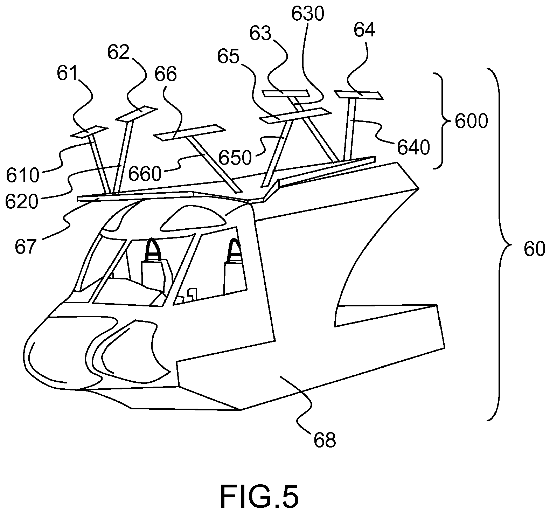

- la figure 5 : un quatrième mode de réalisation possible pour le dispositif selon l'invention.

La figure 1 représente un premier positionneur hexapode 1, selon l'état de la technique, adaptée à la mobilisation d'une plateforme de simulation pour un simulateur. Le premier positionneur hexapode, autrement nommé plateforme de Stewart, possède six degrés de liberté : trois degrés de liberté en translation ainsi que trois degrés de liberté en rotation selon des angles : de tangage, de roulis et de lacet, autrement nommés angles d'Euler. Le premier positionneur hexapode 1 selon l'état de la technique comporte six premières jambes 2, 3, 4, 5, 6, 7. Les six premières jambes 2, 3, 4, 5, 6, 7 sont montées deux par deux par leur extrémité inférieure sur une première articulation 8, 9, 10. Les extrémités inférieures des six premières jambes 2, 3, 4, 5 peuvent être montées sur une première articulation 8, 9, 10 par une rotule à trois degrés de liberté en rotation. Les trois premières articulations 8, 9, 10 sont fixées de manière solidaire à un socle fixe 11. Le socle 11 peut être par exemple une dalle de béton, adaptée à supporter le poids de la plateforme de simulation. Les trois premières articulations 8, 9, 10 sont fixées sur le socle 11, représenté par un premier disque 11 sur la figure 1, de façon à être réparties uniformément sur la circonférence du premier disque 11. Le premier disque 11 a un premier rayon 12 fixé. Chaque première jambe 2, 3, 4, 5, 6, 7, est montée par son extrémité inférieure sur une première articulation 8, 9, 10, avec une première jambe 2, 3, 4, 5, 6, 7 située à sa droite en tournant dans le sens trigonométrique sur la circonférence du premier disque 11. Les extrémités supérieures des six premières jambes 2, 3, 4, 5, 6, 7 sont montées deux par deux par leur extrémité supérieure sur une deuxième articulation 13, 14, 15. Les extrémités supérieures des six premières jambes sont montées sur les deuxième articulations 13, 14, 15 par l'intermédiaire de rotules à trois degrés de liberté. Les trois deuxièmes articulations 13, 14, 15 sont fixées de manière solidaire à une plateforme mobile 16. La plateforme mobile est représenté par un deuxième disque 16 sur la circonférence duquel les deuxièmes articulations 13, 14, 15 sont réparties de manière uniforme. Le rayon du deuxième disque 16 est un deuxième rayon fixé 17. Chaque première jambe 2, 3, 4, 5, 6, 7 est montée en son extrémité supérieure avec une jambe située à sa gauche en tournant dans le sens trigonométrique sur le deuxième disque 16. Les six premières jambes 2, 3, 4, 5, 6, 7 sont actionnées afin de changer de longueur et ainsi, faire varier l'orientation de la plateforme mobile 16. A une position donnée du deuxième disque 16 correspond une combinaison unique de six longueurs des premières jambes 2, 3, 4, 5, 6, 7. Chaque première jambe 2, 3, 4, 5, 6, 7 peut comporter un vérin dont l'allongement permet de faire varier la longueur de la première jambe 2, 3, 4, 5, 6, 7.
Le premier positionneur hexapode 1 selon l'état de la technique est caractérisé par une géométrie définie notamment par des paramètres constants et des paramètres variables. Les valeurs des paramètres dépendent notamment du type d'utilisation du premier positionneur hexapode 1.
Les paramètres constants peuvent être les suivants :
- le premier rayon 12 du premier disque 11 ;
- le deuxième rayon 17 du deuxième disque 16 ;
- une première entraxe 18 des premières articulations 8, 9, 10 ; ladite première entraxe étant la distance entre les deux extrémités inférieures de deux premières jambes 2, 3, 4, 5, 6, 7, fixées sur la même première articulation 8, 9, 10 ;
- une deuxième entraxe 19 des deuxièmes articulations 13, 14, 15 ; ladite deuxième entraxe étant la distance entre les deux extrémités supérieure de deux premières jambes 2, 3, 4, 5, 6, 7, fixées sur la même deuxième articulation 13, 14, 15 ;
- une troisième entraxe représentant la distance entre les premières et deuxièmes articulations 8, 9, 10, 13, 14, 15, lorsque le vérin de chaque première jambe 2, 3, 4, 5, 6, 7 est rentré.
Les paramètres variables sont notamment les courses de chaque vérin de chaque jambe. La valeur de la troisième entraxe additionnée à la valeur de la course d'un vérin donne la longueur de la première jambe 2, 3, 4, 5, 6, 7 comportant le vérin.
Ce type d'actionneur selon l'état de la technique nécessite des vérins qui sont globalement onéreux et peu souples quant à leur mise en oeuvre : peu d'adaptations sont possibles selon l'utilisation souhaitée.

La figure 2 représente un deuxième positionneur hexapode 20 selon l'invention. En considérant les paramètres de l'hexapode, selon l'état de la technique, représenté sur la figure 1, un principe général du positionneur hexapode 20 selon l'invention est notamment de fixer les paramètres suivants :
- le deuxième rayon 17 du deuxième disque 16 ;
- la deuxième entraxe 19 des deuxièmes articulations 13, 14, 15 ;
- la course de chaque vérin de chaque première jambe 2, 3, 4, 5, 6, 7 ;
- la troisième entraxe représentant la distance entre les premières et deuxièmes articulations 8, 9, 10, 13, 14, 15, lorsque le vérin d'une première jambe 2, 3, 4, 5, 6, 7 est rentré ;
et de laisser variable les paramètres suivants :
- la première entraxe 18 des premières articulations 8, 9, 10 ;
- le premier rayon 12 du premier cercle 11 passant par les extrémités inférieures des articulations des six premières jambes 2, 3, 4, 5, 6, 7.

La figure 2 représente un premier exemple de mise en oeuvre du dispositif d'un positionneur hexapode 20 selon l'invention. Par définition, le deuxième positionneur hexapode 20 comporte six deuxièmes jambes 21, 22, 23, 24, 25, 26. Les six deuxièmes jambes 21, 22, 23, 24, 25, 26 de l'hexapode selon l'invention ayant une longueur fixe, elles peuvent être réalisées par une bielle.
Dans le deuxième dispositif de positionneur hexapode 20 selon l'invention, chaque inter-distance entre deux extrémités inférieures de deux deuxièmes jambes 21, 22, 23, 24, 25, 26 voisines, varie de manière indépendante. Les deuxièmes jambes 21, 22, 23, 24, 25, 26 peuvent se déplacer chacune sur un premier segment de droite 210, 220, 230, 240, 250, 260. Les six degrés de liberté typiques du fonctionnement d'un hexapode, selon l'état de la technique, sont alors bien réalisés par le deuxième positionneur hexapode 20 selon l'invention. Chaque premier segment de droite 210, 220, 230, 240, 250, 260 a une longueur fixée 200 qui peut être différente pour chaque premier segment de droite 210, 220, 230, 240, 250, 260. De manière générale, chaque premier segment de droite 210, 220, 230, 240, 250, 260 peut appartenir à un même plan ou au moins à des plans parallèles, c'est-à-dire coplanaires. Les six premiers segments de droite 210, 220, 230, 240, 250, 260 appartiennent chacun à une droite différente. Dans la suite, à titre d'exemple et pour faciliter l'exposé de l'invention, les segments de déplacement des extrémités inférieures des jambes de l'actionneur hexapode selon l'invention sont représentés de manière coplanaire. Chaque premier segment de droite 210, 220, 230, 240, 250, 260 peut comporter une première extrémité appartenant à une première ellipse, et une deuxième extrémité appartenant à une deuxième ellipse. Sur la figure 2, la première ellipse et la deuxième ellipse sont confondues et forment un troisième cercle 201. Sur la figure 2, chaque extrémité de chaque premier segment de droite 210, 220, 230, 240, 250, 260 fait partie du troisième cercle 201 de troisième rayon fixé 202. Le troisième cercle 201 représente un support sur lequel peuvent être fixés par exemple des rails réalisant les segments de droite 210, 220, 230, 240, 250, 260.
Chaque extrémité supérieure des deuxièmes jambes 21, 22, 23, 24, 25, 26 peut être montée libre sur une rotule 211, 221, 231, 241, 251, 261 à trois degrés de liberté en rotation. Les rotules 211, 221, 231, 241, 251, 261 peuvent être coplanaires et appartenir à un même quatrième cercle 203 de quatrième rayon fixé 204. Les rotules 211, 221, 231, 241, 251, 261 peuvent être fixées sur une même plateforme mobile. Par exemple, les rotules 211, 221, 231, 241, 251, 261 peuvent être montées deux à deux sur une articulation 13, 14, 15, tel que représenté sur la figure 1. La plateforme mobile peut par exemple porter une cabine de pilotage dans le cas d'un simulateur de véhicule ou d'aéronef.
Sur la figure 2, le premier exemple de réalisation est construit en utilisant des premiers segments de déplacements 210, 220, 230, 240, 250, 260 pour les extrémités inférieures 212, 222, 232, 242, 252, 262 des deuxièmes jambes 21, 22, 23, 24, 25, 26. Les premiers segments 210, 220, 230, 240, 250, 260 peuvent faire partie d'un hexagone régulier. Ce type de configuration permet avantageusement de privilégier les mouvements de lacets. Les premiers segments 210, 220, 230, 240, 250, 260 peuvent être réalisés par des axes linéaires que l'on trouve couramment dans un commerce d'équipements pour des machines outils ou un commerce d'équipement pour des machines de transfert, notamment utilisées dans des lignes d'assemblage. Les axes linéaires peuvent être composés de rails de guidage motorisés comportant notamment : un moteur engrenant sur une crémaillère ou une courroie dentée, ou entrainé par adhérence ou sans contact par un moteur électromagnétique linéaire, selon les performances d'accélération requises. Par exemple : les extrémités inférieures 212, 222, 232, 242, 252, 262 peuvent alors comporter une courroie crantée adaptée au déplacement desdites extrémités inférieures 212, 222, 232, 242, 252, 262 sur le rail de guidage formé par la crémaillère. Dans une autre mise en oeuvre du dispositif selon l'invention, chaque premier segment 210, 220, 230, 240, 250, 260 peut être réalisé par un rail de guidage chaque extrémité inférieure 212, 222, 232, 242, 252, 262 des deuxièmes jambes 21, 22, 23, 24, 25, 26 comportant une roue se déplaçant sur chaque rail de guidage. Dans une autre mise en oeuvre du dispositif selon l'invention, chaque extrémité inférieure 212, 222, 232, 242, 252, 262 des deuxièmes jambes 21, 22, 23, 24, 25, 26 peut reposer sur un chariot guidé sur le rail de guidage. Avantageusement, un actionneur utilisant des rails associés à des roues est par principe silencieux et ne génère pas ou peu de vibrations. D'autre part, à chaque extrémité des premiers segments 210, 220, 230, 240, 250, 260 peuvent être positionnés des amortisseurs de fin de course standards intégrés au rail et fixés directement sur le support. L'ensemble formé des efforts de la plateforme de simulation est donc réparti au niveau du support.
Par convention et dans la suite de la demande, les extrémités inférieures des jambes de l'hexapode selon l'invention sont les extrémités rattachées à une partie fixe du simulateur, c'est-à-dire le support du simulateur. Tandis que les extrémités supérieures des jambes de l'hexapode selon l'invention sont les extrémités rattachées à la partie mobile du simulateur : la plateforme de simulation du simulateur.
Avantageusement, pour augmenter les débattements de la plate-forme de simulation il est intéressant d'incliner chaque rail par rapport au sol, pour notamment accroître les effets de déplacement vertical, longitudinal et latéral tel que représenté sur la figure 2bis. Sur la figure 2bis, chacun des premiers segments 210, 220, 230, 240, 250, 260 est incliné par rapport au support. Chacun des premiers segments 210, 220, 230, 240, 250, 260 est disposé de façon à se situer tête bêche par rapport aux segments voisins. Par exemple, chaque extrémité de chaque segment consécutif 210, 220, 230, 240, 250, 260 peut être située par exemple à une même distance du support.

La figure 3 représente un deuxième mode de réalisation possible pour l'hexapode selon l'invention. La figure 3 représente donc un troisième positionneur hexapode 30 selon l'invention. Le troisième hexapode 30 comporte six troisièmes jambes 31, 32, 33, 34, 35, 36, telles que les deuxièmes jambes 21, 22, 23, 24, 25, 26 représentées sur la figure 2. Comme sur la figure 2 chaque troisièmes jambes 31, 32, 33, 34, 35, 36 peut avoir une longueur fixe et être réalisées au moyen d'une bielle. Les extrémités inférieures des troisièmes jambes 31, 32, 33, 34, 35, 36 peuvent se déplacer de manière longitudinale sur un deuxième segment 310, 320, 330, 340, 350, 360. Les deuxièmes segments 310, 320, 330, 340, 350, 360 peuvent être orientés de manière concentrique, vers un premier centre 36 d'un cinquième cercle 37 de cinquième rayon 38. Les deuxièmes segments 310, 320, 330, 340, 350, 360 peuvent s'étendre entre le cinquième cercle 37 et un sixième cercle 39 situé à l'intérieur de cinquième cercle 37 et de même premier centre 36 que le cinquième cercle 37. Les extrémités supérieures des troisièmes jambes 31, 32, 33, 34, 35, 36 peuvent chacune être montées libres sur une rotule à trois degrés de liberté en rotation 211, 221, 231, 241, 251, 261 tel que représenté sur la figure 2. Cette configuration privilégie particulièrement les déplacements verticaux d'une plateforme de simulation.

La figure 4 représente un troisième mode de réalisation possible pour l'hexapode selon l'invention. Le troisième mode de réalisation est un quatrième actionneur hexapode 40 selon l'invention. Le quatrième hexapode 30 comporte six quatrièmes jambes 41, 42, 43, 44, 45, 46, telles que les troisièmes jambes 31, 32, 33, 34, 35, 36 représentées sur la figure 3. Comme sur la figure 3 les six quatrièmes jambes 41, 42, 43, 44, 45, 46 peuvent avoir une longueur fixe et peuvent être réalisées au moyen de bielles. Les extrémités inférieures des quatrièmes jambes 41, 42, 43, 44, 45, 46 peuvent se déplacer de manière longitudinale sur un troisième segment 410, 420, 430, 440, 450, 460. Les troisièmes segments 410, 420, 430, 440, 450, 460 peuvent s'étendre entre un septième cercle 47 et un huitième cercle 48 situé à l'intérieur du septième cercle 47 et de même deuxième centre 49 que le septième cercle 47. Les troisièmes segments 410, 420, 430, 440, 450, 460 ne sont pas obligatoirement orientés vers le deuxième centre 49. Les extrémités supérieures des quatrièmes jambes 31, 32, 33, 34, 35, 36 peuvent chacune être montées libres sur une rotule à trois degrés de liberté en rotation 211, 221, 231, 241, 251, 261 tel que représentée sur la figure 2. Cette configuration est une généralisation de la configuration représentée sur la figure 3.

La figure 5 représente un mode d'utilisation possible 60 de l'hexapode selon l'invention. La figure 5 représente un quatrième hexapode 600 selon l'invention comportant six sixièmes jambes 610, 620, 630, 640, 650, 660. Six cinquièmes segments 61, 62, 63, 64, 65, 66 sont fixés de manière solidaire sur un plafond d'une pièce, par exemple un hangar. Des extrémités inférieures des six cinquièmes jambes 610, 620, 630, 640, 650, 660 sont montées de manière à se déplacer chacune sur un cinquième segment 61, 62, 63, 64, 65, 66. Chaque extrémité supérieure des six sixièmes jambes 610, 620, 630, 640, 650, 660 est montée sur une rotule à trois degrés de liberté en rotation. Les rotules sont elles-mêmes sont fixées à une plateforme de simulation 67 sur laquelle est montée une cabine de pilotage 68 d'un hélicoptère. Avantageusement un tel dispositif de simulation permet d'améliorer les sensations du pilote en plaçant la cabine 68 de l'hélicoptère dans des conditions proches des conditions réelles.

Dans une autre utilisation avantageuse, le dispositif selon l'invention permet de compléter des performances obtenues par une plate-forme vibrante à trois degrés de liberté pour des cabines de simulateurs de type FFS level D, en ajoutant à ces plate-forme vibrantes les trois degrés de liberté manquants. Dans le cas d'une utilisation en tant que plateforme vibrante, seule la cabine du simulateur est mobile, le dispositif de visualisation reste fixe, et ceci afin de pouvoir déplacer avec un minimum de contrainte la cabine dans des configurations de plateforme vibrante. En effet, le dispositif de visualisation étant très lourd et les plateformes vibrantes demandant beaucoup d'énergie, il est particulièrement judicieux dans ce cas de déporter le dispositif de visualisation à l'extérieur de la cabine de pilotage.

Avantageusement les actionneurs hexapodes selon l'invention, formés de rails et de roues, sont par principe silencieux et ne génèrent pas de vibrations. Par exemple de tels actionneurs sont utilisés dans des machines à rectifier planes qui sont très sensibles aux vibrations. D'autre part, à chaque extrémité des premiers segments, peuvent être positionnés des amortisseurs de fin de course standards intégrés au rail et fixés directement sur un support.
Avantageusement, un tel actionneur hexapode selon l'invention peut être mis en oeuvre en utilisant des rails de guidage existant dans le commerce et dont seule la longueur est adaptée. Les rails peuvent comporter une motorisation adaptée à l'application de l'actionneur hexapode selon l'invention. Par exemple : un moteur électromagnétique linéaire, adapté pour être utilisé par des dispositifs vibrants avec une fréquence de vibrations supérieure à cinquante hertz, ayant une grande accélération et ne supportant aucun jeu, associé à des chariots de guidage pour des machines outils. Lesdits chariots de guidage peuvent être des chariots de guidage à circulation de billes encagées possédant avantageusement une longue durée de vie et une très grande douceur de fonctionnement. Ce type de moteur linéaire adapté à un positionneur hexapode selon l'invention permet avantageusement de réaliser des mouvements de faible amplitude de l'ordre de plus ou moins cinq degrés d'angle. Ce type de moteur linéaire permet également de simuler des fréquences de vibration du type de celles ressenties à bord d'un hélicoptère lors de changement de phases de vol : par exemple en vol stationnaire, en vol avec effet de sol, en vol vortex. Dans une autre mise en oeuvre, l'utilisation d'un moteur à crémaillère avec de longues courses permet de produire des amplitudes plus grandes avec des angles de l'ordre d'une vingtaine de degrés, tel que requis par exemple pour les simulateurs répondant aux critères de qualification FFS level B.
Un autre des avantages de la présente invention est de pouvoir être mise en oeuvre en utilisant des actionneurs ou d'autres composants produits en grande série et donc bénéficiant d'un prix intéressant. Ceci permet donc de réduire le prix de production des simulateurs utilisant des actionneurs selon l'invention.
Un des avantages du dispositif actionneur selon l'invention est d'être construit à partir d'éléments indépendants modulaires, pouvant être facilement remplacés sans impact sur le reste de l'actionneur. Le dimensionnement de l'actionneur selon l'invention se trouve donc grandement simplifié par la modularité de ses composants selon son utilisation.
Un autre avantage du dispositif selon l'invention est de permettre une diminution des vibrations et des accélérations parasites provoquées par les vis à billes ou les rouleaux des dispositifs de mobilisation hexapodes couramment utilisés. Avantageusement, ceci permet de ne pas perturber l'entrainement du pilote et d'éviter une erreur d'interprétation des vibrations/accélérations parasites par le pilote. Un autre avantage par rapport aux dispositifs existants est de réduire le bruit de la plate-forme mobile en mouvement.
Avantageusement, le dispositif selon l'invention permet d'améliorer la sécurité des simulateurs en revenant en position basse stable pour permettre une évacuation de l'équipage de la cabine en cas d'arrêt d'urgence, par exemple en cas de panne ou de perte d'énergie.
La certification du simulateur en terme de sécurité se trouve simplifiée en utilisant le dispositif de mobilisation du simulateur selon l'invention : en effet, l'intégration d'amortisseurs de fin de course existants dans le commerce, déjà homologués et largement utilisés, en font des systèmes d'amortissement connus pour leur fiabilité.

## Revendications

1. Dispositif actionneur hexapode (20), reposant sur un support sensiblement plan, comportant :
- six jambes (21, 22, 23, 24, 25, 26), chacune des six jambes ayant une extrémité supérieure (211, 221, 231, 241, 251, 261) et une extrémité inférieure (212, 222, 232, 242, 252, 262), tel que :
- l'extrémité supérieure (211, 221, 231, 241, 251, 261) de chacune des six jambes est montée sur une rotule ayant trois degrés de liberté en rotation, chaque rotule étant solidaire d'une plateforme mobile (203) ; et
- l'extrémité inférieure (212, 222, 232, 242, 252, 262) de chacune des six jambes est mobile le long d'un axe linéaire correspondant (210, 220, 230, 240, 250, 260) ;
et
- six axes linéaires (210, 220, 230, 240, 250, 260) fixes par rapport au support plan.
le dispositif étant **caractérisé en ce que** :
- chacun des six axes linéaires est soit coplanaire soit incliné par rapport au support plan;
- chaque inter-distance entre les extrémités inférieures de deux jambes voisines varie de manière indépendante ;
et
- chacun des six axes linéaires a une longueur fixée qui peut être différente avec une première extrémité appartenant à une première ellipse (37,47) et une deuxième extrémité appartenant à une deuxième ellipse (39, 48), la première ellipse et la deuxième ellipse étant ou non confondues, et tel que les projections de chacun des axes linéaires sur le support plan définissent des lignes droites distinctes, deux lignes consécutives étant non parallèles.

2. Dispositif selon la revendication 1, **caractérisé en ce que** les axes linéaires (210, 220, 230, 240, 250, 260) sont solidaires d'un support plan au sol.

3. Dispositif selon la revendication 1, **caractérisé en ce que** les axes linéaires (210, 220, 230, 240, 250, 260) sont solidaires d'un support plan au plafond.

4. Dispositif selon l'une quelconque des revendications précédentes, **caractérisé en ce que** les axes linéaires (210, 220, 230, 240, 250, 260) sont réalisés par des rails, chaque première extrémité (212, 222, 232, 242, 252, 262) de chaque jambe (21, 22, 23, 24, 25, 26) étant munie d'une roue, lesdites jambes (21, 22, 23, 24, 25, 26) étant mobilisés par au moins un moteur électromagnétique linéaire.

5. Dispositif selon l'une quelconque des revendications 1 à 3, **caractérisé en ce que** les axes linéaires (210, 220, 230, 240, 250, 260) sont réalisés par des rails, chaque première extrémité (212, 222, 232, 242, 252, 262) de chaque jambe (21, 22, 23, 24, 25, 26) reposant sur un chariot guidé sur un des rails, le chariot étant entraîné par un moteur engrainant sur une crémaillère.

6. Dispositif selon la revendication 5, **caractérisé en ce que** le chariot est entraîné par un moteur engrainant sur une crémaillère.

7. Dispositif selon la revendication 5, **caractérisé en ce que** le chariot est entraîné par un moteur engrainant sur une courroie crantée.

8. Dispositif selon la revendication 5, **caractérisé en ce que** le chariot est entraîné par adhérence.

9. Dispositif selon la revendication 5, **caractérisé en ce que** le chariot est entraîné par une vis à billes ou à rouleaux.

## Patentansprüche

1. Sechsfüßige Betätigungsvorrichtung (20), die auf einer im Wesentlichen ebenen Auflage ruht, die Folgendes umfasst:
- sechs Beine (21, 22, 23, 24, 25, 26), wobei jedes der sechs Beine ein oberes Ende (211, 221, 231, 241, 251, 261) und ein unteres Ende (212, 222, 232, 242, 252, 262) hat, so dass:
- das obere Ende (211, 221, 231, 241, 251, 261) jedes der sechs Beine an einem Drehgelenk mit drei Drehfreiheitsgraden montiert ist, wobei jedes Drehgelenk mit einer mobilen Plattform (203) fest verbunden ist; und
- das untere Ende (212, 222, 232, 242, 252, 262) jedes der sechs Beine entlang einer entsprechenden linearen Achse (210, 220, 230, 240, 250, 260) beweglich ist; und
- sechs lineare Achsen (210, 220, 230, 240, 250, 260), die mit Bezug auf die ebene Auflage fixiert sind;
wobei die Vorrichtung **dadurch gekennzeichnet ist, dass**:
- jede der sechs linearen Achsen mit Bezug auf die ebene Auflage entweder koplanar oder geneigt ist;
- jede Zwischendistanz zwischen den unteren Enden von zwei benachbarten Beinen auf unabhängige Weise variiert;
und
- jede der sechs linearen Achsen eine feste Länge hat, die unterschiedlich sein kann, wobei ein erstes Ende zu einer ersten Ellipse (37, 47) gehört und ein zweites Ende zu einer zweiten Ellipse (39, 48) gehört, wobei die erste Ellipse und die zweite Ellipse zusammenfallen oder nicht, und so dass die Vorsprünge von jeder der linearen Achsen auf der ebenen Auflage separate gerade Linien definieren, wobei zwei konsekutive Linien nicht parallel sind.

2. Vorrichtung nach Anspruch 1, **dadurch gekennzeichnet, dass** die linearen Achsen (210, 220, 230, 240, 250, 260) mit einer ebenen Auflage am Boden fest verbunden sind.

3. Vorrichtung nach Anspruch 1, **dadurch gekennzeichnet, dass** die linearen Achsen (210, 220, 230, 240, 250, 260) mit einer ebenen Auflage an der Decke fest verbunden sind.

4. Vorrichtung nach einem der vorherigen Ansprüche, **dadurch gekennzeichnet, dass** die linearen Achsen (210, 220, 230, 240, 250, 260) durch Schienen realisiert werden, wobei jedes erste Ende (212, 222, 232, 242, 252, 262) jedes Beins (21, 22, 23, 24, 25, 26) mit einem Rad ausgestattet ist, wobei die Beine (21, 22, 23, 24, 25, 26) durch wenigstens einen elektromagnetischen Linearmotor in Bewegung versetzt werden.

5. Vorrichtung nach einem der Ansprüche 1 bis 3, **dadurch gekennzeichnet, dass** die linearen Achsen (210, 220, 230, 240, 250, 260) durch Schienen realisiert werden,
wobei jedes erste Ende (212, 222, 232, 242, 252, 262) jedes Beins (21, 22, 23, 24, 25, 26) auf einem auf einer der Schienen geführten Schlitten ruht, wobei der Schlitten von einem mit einer Zahnstange kämmenden Motor angetrieben wird.

6. Vorrichtung nach Anspruch 5, **dadurch gekennzeichnet, dass** der Schlitten von einem auf einer Zahnstange kämmenden Motor angetrieben wird.

7. Vorrichtung nach Anspruch 5, **dadurch gekennzeichnet, dass** der Schlitten von einem auf einem Zahnriemen kämmenden Motor angetrieben wird.

8. Vorrichtung nach Anspruch 5, **dadurch gekennzeichnet, dass** der Schlitten durch Haftung angetrieben wird.

9. Vorrichtung nach Anspruch 5, **dadurch gekennzeichnet, dass** der Schlitten durch eine Kugelumlaufspindel oder eine Gewindespindel angetrieben wird.

## Claims

1. Hexapod actuator device (20), resting on a substantially planar support, comprising:
- six legs (21, 22, 23, 24, 25, 26), each of the six legs having an upper end (211, 221, 231, 241, 251, 261) and a lower end (212, 222, 232, 242, 252, 262), such that:
- the upper end (211, 221, 231, 241, 251, 261) of each of the six legs is mounted on a ball joint having three degrees of freedom in rotation, each ball joint being fixedly joined to a movable platform (203); and
- the lower end (212, 222, 232, 242, 252, 262) of each of the six legs can be moved along a corresponding linear axis (210, 220, 230, 240, 250, 260);
and
- six linear axes (210, 220, 230, 240, 250, 260) which are fixed relative to the planar support;
the device being **characterised in that**:
- each of the six linear axes is either coplanar or inclined relative to the planar support;
- each inter-distance between the lower ends of two adjacent legs varies in an independent manner;
and
- each of the six linear axes has a fixed length which may be different with a first end belonging to a first ellipse (37, 47) and a second end belonging to a second ellipse (39, 48), the first ellipse and the second ellipse coinciding or not coinciding, and such that the projections of each of the linear axes on the planar support define separate straight lines, two consecutive lines being non-parallel.

2. Device according to claim 1, **characterised in that** the linear axes (210, 220, 230, 240, 250, 260) are fixedly joined to a planar support on the ground.

3. Device according to claim 1, **characterised in that** the linear axes (210, 220, 230, 240, 250, 260) are fixedly joined to a planar support on the ceiling.

4. Device according to any one of the preceding claims, **characterised in that** the linear axes (210, 220, 230, 240, 250, 260) are formed by rails, each first end (212, 222, 232, 242, 252, 262) of each leg (21, 22, 23, 24, 25, 26) being provided with a wheel, the legs (21, 22, 23, 24, 25, 26) being mobilized by at least one linear electromagnetic motor.

5. Device according to any one of claims 1 to 3, **characterised in that** the linear axes (210, 220, 230, 240, 250, 260) are formed by rails,
each first end (212, 222, 232, 242, 252, 262) of each leg (21, 22, 23, 24, 25, 26) resting on a carriage guided on one of the rails, the carriage being driven by a motor which engages with a rack.

6. Device according to claim 5, **characterised in that** the carriage is driven by a motor which engages with a rack.

7. Device according to claim 5, **characterised in that** the carriage is driven by a motor which engages with a toothed belt.

8. Device according to claim 5, **characterised in that** the carriage is driven by adhesion.

9. Device according to claim 5, **characterised in that** the carriage is driven by a ball screw spindle or roller screw.
